# EUROPEAN PATENT APPLICATION

(11) **EP 4 585 287 A1**
(43) Date of publication of application: **16.07.2025**
(21) Application number: 24020014.7
(22) Date of filing: 10.01.2024
(51) Int. Cl.: B01D 19/00, C25B 1/04, C25B 15/08

(54) **GAS SEPARATION VESSEL, CORRESPONDING METHOD AND SYSTEM**

(71) Applicant: Linde GmbH, 82049 Pullach (DE)
(72) Inventor: Bauer, Ludwig, 82049 Pullach (DE); Otte, Daniel, 82049 Pullach (DE); Flegiel, Felix, 82049 Pullach (DE); Lauchner, Daniela, 82049 Pullach (DE)
(74) Representative: Lu, Jing

(57) **Abstract**

The invention relates to a gas separation vessel (220) for separating gas from liquid of a continuous liquid phase fluid comprising gas, the gas separation vessel comprising an inlet (242), a gas outlet (242) and a fluid outlet (254), wherein the gas separation vessel) is configured to receive a stream of fluid (c) via the inlet (242) of the gas separation vessel (220), wherein the gas separation vessel comprises a gas separation assisting means (260) located inside the gas separation vessel (220), wherein the gas separation vessel is configured to guide fluid (b) received via the inlet of the gas separation vessel, from an inlet zone (240), through the gas separation assisting means, to an outlet zone (250), wherein the gas separation vessel (220) is configured to guide gas (g), separated from the liquid by means of the gas separation assisting means, through a gas outlet (252) of the gas separation vessel, and wherein the gas separation vessel is configured to guide remaining fluid (b), through the fluid outlet (254) of the gas separation vessel.

## Description

The present invention relates to a gas separation vessel for separating gas from liquid of a continuous liquid phase fluid comprising gas, to a system, e.g., an electrolysis system, comprising such a gas separation vessel, and to a corresponding method for separating gas from liquid of a continuous liquid phase fluid comprising gas.

### Background

Electrolysis can be used to produce hydrogen, in which water, for example, is separated or converted into oxygen and hydrogen using electrical energy. This is also referred to as water electrolysis. For example, proton exchange membrane electrolysis (PEM electrolysis) can be considered here.

A large proportion of the water usually remains on the oxygen side of the membrane in PEM electrolysis. While the hydrogen is produced and discharged on the other side of the membrane, the oxygen initially remains in the water and is then typically separated from the water in a tank, also so-called gas separation vessel. Since the water typically is to be reused and again guided into the electrolysis unit for separation, the oxygen remaining the water should be removed from the water beforehand as good as possible, at least excess oxygen that is not soluble in water. This also applies to other continuous liquid phase fluid comprising gas.

### Disclosure of the Invention

This object is achieved by providing a gas separation vessel, a system and a corresponding method with the features of the independent claims. Embodiments of the invention are the subject of the dependent claims and of the description that follows.

The invention relates to separating gas from liquid of a continuous liquid phase fluid comprising gas, gas separation vessels used for that and, in particular, systems like for separating gas from liquid of a continuous liquid phase fluid comprising gas electrolysis systems. It is noted that the invention will be explained with a particular focus on water electrolysis and electrolysis systems (or electrolysis plants) and their operation. However, separating gas from continuous liquid phase fluids such as oxygen from water (with oxygen therein) can also be used in different applications.

Such electrolysis systems are typically used to produce or extract hydrogen by means of electrolysis. In so-called water electrolysis, water is converted (separated) into hydrogen and oxygen, i.e. in addition to hydrogen, oxygen is always obtained or produced at the same time. In water electrolysis, there are, for example, alkaline water electrolysis (AEL, "alkaline electrolysis") or proton exchange membrane electrolysis (PEM electrolysis, "proton exchange membrane" electrolysis). The basics of these are known, e.g. from " Bessarabov et al: PEM electrolysis for Hydrogen production. CRC Press."

There are also so-called solid oxide electrolyser cells (SOEC, "Solid Oxide Electrolysis Cell") and anion exchange membrane electrolysis (AEM electrolysis, "Anion Exchange Membrane" electrolysis). In particular, those electrolysis technologies that take place at low temperatures, e.g. PEM, AEL and AEM electrolysis, are suitable for supporting the transition of energy generation to renewable energies due to the possibilities of flexible operation.

In PEM electrolysis, for example, water, in particular demineralised water, is fed as a feed medium for stream of fluid to an electrolysis unit with a proton exchange membrane (PEM), in which the feed medium, i.e. the water, is converted (separated) into hydrogen and oxygen.

As mentioned, a large proportion of the water usually remains on the oxygen side of the membrane during PEM electrolysis. While the hydrogen is produced and discharged on the other side of the membrane, the oxygen initially remains in the water and is then typically separated from the water in a gas separation vessel or container (which is used as a gas or oxygen separator).

As mentioned above, the water typically is to be reused and again guided into the electrolysis unit for separation. In general, large quantities of water can be circulated in order to limit the temperature rise of the water during (PEM) electrolysis and to allow for sufficient turbulence inside the stack. The majority of the water remains on the oxygen side of the membrane (anode). Downstream of the electrolysis unit (electrolyser), the gaseous substances in the water that exceed the solubility are to be separated. This, in particular, holds true for oxygen.

For this purpose, the gas separation vessel (or also called degassing tank) as mentioned above is used, which vessel can, for example, be designed either vertically or horizontally oriented (i.e., the gas separation vessel is an elongated vessel that is oriented either vertically or horizontally). Without further installations, oxygen (gas) bubbles in the water (liquid, or the fluid comprising water and oxygen) require a certain amount of time, depending on their size and the flow direction of the water, to rise to the water surface due to the difference in density; only when the oxygen bubble have reached the surface, the oxygen bubbles can be considered separated from the water. The longer the residence time of the water phase in the gas separation vessel, the larger and more expensive the gas separation vessel will be. The smallest bubbles can no longer be separated economically in this way.

Small oxygen bubbles that return to the electrolysis unit can have a negative effect on performance and service life. Thus, oxygen degassing or removal should be optimised.

In view of this, a way for separating gas from liquid of a continuous liquid phase fluid comprising gas is proposed, e.g., within operating an electrolysis system, wherein water is converted into oxygen and hydrogen in the electrolysis unit of the electrolysis system. A fluid, comprising liquid like water and gas like oxygen, is, e.g., guided from an oxygen side of the electrolysis unit (or another processing unit, if applicable) to the gas separation vessel. A fluid connection (e.g., one or more pipes) connecting an oxygen side of the electrolysis unit with an inlet of the gas separation vessel can be used here. The gas (oxygen) is separated from liquid (water), in the gas separation vessel, in that the fluid is guided, from an inlet zone, through a gas separation assisting means located inside the gas separation vessel, to an outlet zone. The gas (oxygen), separated from the liquid (water) by means of the gas separation assisting means, is then guided through a gas outlet of the gas separation vessel. Remaining fluid (i.e., mainly water) is guided, through a fluid outlet of the gas separation vessel; this remaining fluid can then be feed to the electrolysis unit again, for example.

The gas separation assisting means (can also be called degassing means) helps removing gas like oxygen in that gas or oxygen bubbles, in particular small ones, are agglomerated and coalesced by means of the gas separation assisting means when the fluid is guided from the inlet zone to the outlet zone. In an embodiment, the gas separation assisting means comprises at least one of: a structured packing, a random packing, a coalescent packing, a mesh, a structure having high specific surface, high void fraction, and a plate pack.

As mentioned, liquid (water) and gas (gaseous oxygen) enter the gas separation vessel. A part of the gas (oxygen) is present as gas bubbles under the liquid (water) surface. If these gas bubbles now enter the gas separation assisting means, e.g., the packing, they adhere to the large specific surface offered and coalesce with other bubbles to form larger bubbles. The buoyancy of these larger bubbles is higher than the buoyancy of smaller bubbles. When leaving the gas separation assisting means, these larger bubbles therefore reach the liquid (water) surface much faster and are, therefore, separated. Thus, using such gas separation assisting means having, in particular, a high specific surface, helps faster and/or better separating gas (oxygen) from liquid (water).

In general, all packings, tower packings or meshes with a high specific surface area can be used for bubble coalescence. The choice can depend on the fluid, the operating conditions and the structural conditions. All common materials can be used, although plastic packings are particularly suitable for PEM electrolysis. Typical metal meshes or packings are made from wires or sheets with a thickness of less than 1 mm. They usually have a specific surface area of ≥ 100 m2/m3 and void fraction > 0.9. Plastic meshes or packings may exceed a base structure thickness of 1 mm.

An advantage of using such coalescent packing or similar is, in particular, the coalescence and thus separation of very small bubbles, which would remain in the liquid phase without the gas separation assisting means. In addition, reduction of the residence time of the fluid in the gas separation vessel required for a specific separation or increase in the maximum possible flow rate is possible. This reduces the apparatus size and costs.

In particular, it has turned out that such coalescent packing or similar or other gas separation assisting means can very efficiently be used with continuous liquid phase fluid comprising gas, in particular, a fluid that is continuously supplied to the gas separating vessel and comprises gas or gas bubbles which should be removed, because the (ideally pure) liquid is required for further use afterwards. This means, gas is removed from the liquid, in contrast to, e.g., removing liquid or liquid drops from a gaseous phase.

In an embodiment, the gas separation assisting means is made of plastic or coated with plastic. In addition, the inner surface of the gas separation vessel can also be coated with plastic, for example. This helps reducing or preventing the introduction of iron ions into the fluid which would disturb the membrane of a PEM electrolysis unit, for example.

In an embodiment the gas separation vessel is an elongated vessel that is horizontally oriented, wherein the gas separation assisting means is located, seen in horizontal direction, between the inlet on the inlet zone and the gas outlet and the fluid outlet on the outlet zone. In this way, the fluid feed into the gas separation vessel is present at a large area on the lower part of the (horizontally oriented) gas separation vessel. The gas separation assisting means can easily be located in the sump of the gas separation vessel.

In an embodiment, the inlet comprises an inlet pipe guided into the inside of the gas separation vessel, wherein the inlet pipe comprises an opening, wherein the opening is directed at least partly towards a wall of the gas separation vessel and at least partly away from the gas separation assisting means. Such opening can be, for example, in the form of a half-opening. In this way, the introduction of oxygen into the water inside the gas separation vessel can be minimized; this reduces the amount of gas (oxygen) to be separated and thus also improves the separation of gas (oxygen).

In an embodiment, the gas separation vessel further comprises a calming baffle. Such calming baffle can comprise a splash plate or perforated splash plate or expanded material or combinations thereof. The calming baffle is arranged inside the gas separation vessel, wherein the inlet pipe extends through the calming baffle (or a hole or opening therein). Such calming baffle can also help the introduction of gas (oxygen) into the water inside the gas separation vessel be minimized; this reduces the amount of gas (oxygen) to be separated and decreases the rising length for bubbles to be separated. It thus also improves the separation of gas (oxygen).

In an embodiment, the inlet pipe is arranged vertically, and the calming baffle is oriented horizontally. This is of particular help when the gas separation vessel is oriented horizontally.

Further advantages and embodiments of the invention will be apparent from the description and the accompanying drawing. The invention is illustrated schematically by means of embodiments in the drawing and is described below with reference to the drawing.

Short description of the figures
- Fig. 1: illustrates an electrolysis system according to an embodiment;
- Fig. 2: illustrate a gas separation vessel according to an embodiment; and
- Figs. 3, 4, 5, 6, 7a, 7b: illustrate gas separation vessels according to further embodiments.

### Detailed description of the figures

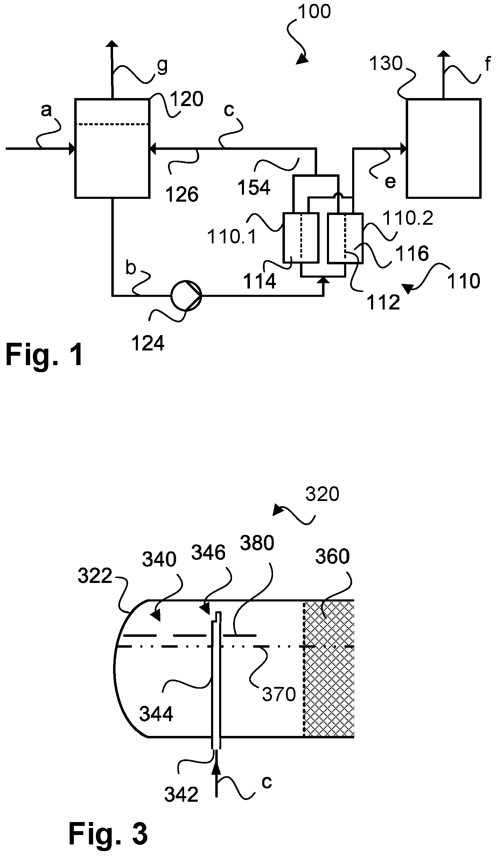

Fig. 1 schematically illustrates an electrolysis system 100 in an embodiment, and which can be operated by means of a method in an embodiment as described herein. This is to illustrated the way of separating gas from liquid of a continuous liquid phase fluid comprising gas. As mentioned, such way of separating gas from liquid can also be applied in different applications or systems, for example.

By means of example, electrolysis system 100 is configured for water electrolysis using PEM. In particular, the electrolysis system shown here and generally described in the context of the invention is an electrolysis system on an industrial scale, for example to produce hydrogen on an industrial scale. Atypical output of such an electrolysis system is, for example, more than 5 MW or even more than 20 MW.

The electrolysis system 100 comprises an electrolysis unit 110, which exemplarily comprises two so-called electrolysis cells or stacks 110.1, 110.2, in each of which a proton exchange membrane (PEM) 112 is provided. The PEM 112 separates each of the electrolysis cells into an oxygen side 114 and a hydrogen side 116. The oxygen sides 114 and the hydrogen sides 116 can together be regarded as the oxygen side and the hydrogen side, respectively, of the electrolysis unit 110. It should be noted that an electrolysis unit 110 may also have only one or more than two electrolysis cells, for example, depending on size and requirements.

The electrolysis system 100 further comprises gas separating vessel 120, e.g., in the form of a container or tank. The gas separating vessel 120, shown schematically here only, is used to separate oxygen from fluid supplied thereto; thus, gas separating vessel 120 is an oxygen separator or oxygen-water separator. The gas separating vessel 120 is connected to the electrolysis unit 110 or each of the electrolysis cells 110.1, 110.2 via a fluid connection. This allows a stream of fluid b to be pumped from the gas separating vessel 120 to the electrolysis unit, for example by means of a pump 124. The electrolysis unit 110 is also connected to the gas separating vessel 120 via a fluid connection 126, for example one or more pipes. Through the fluid connection 126, a fluid flow c can be pumped from the electrolysis unit 110, there the oxygen side 114 or the oxygen side of each electrolysis cell, to the gas separating vessel 120; the pump 124 is also sufficient for this purpose.

In addition, the electrolysis system 100 comprises a further gas separator 130, in this case a hydrogen separator or hydrogen-water separator. Although only one electrolysis unit 110 is shown here, several of these can also be provided, for example depending on the size and output of the electrolysis system 100. Several electrolysis units can then, for example, still be connected to a common gas separating vessel and/or a common hydrogen separator.

During operation of the electrolysis system 100, fluid stream b, which comprises water, is now pumped from the gas separating vessel 120 to the electrolysis unit 110. There, water is converted into oxygen and hydrogen. For this purpose, an electrical voltage is applied to the electrolysis unit 110, the hydrogen is transported electrochemically through the PEM 112 to the hydrogen side 116 and can be fed from there, possibly still mixed with water vapour and a liquid water phase, as stream e to the hydrogen separator 130. There, the hydrogen can be separated and discharged or stored as stream f, for example for further use. The separated water is fed, for example, to a treatment process and then returned to the main water circuit.

The oxygen remains on the oxygen side 114 together with the majority of the water. Such fluid, comprising water and oxygen, is then guided, see stream c, from the oxygen side 114 unit to the gas separation vessel 120, via fluid connection 126.

In the gas separation vessel 120, oxygen is separated from water, in that the fluid is guided, from an inlet zone, through a gas separation assisting means located inside the gas separation vessel 120, to an outlet zone. Oxygen, separated from the water by means of the gas separation assisting means, is guided or discharged, from the outlet zone, through a gas outlet of the gas separation vessel 120, indicated by stream g in Fig. 1, for example for further use. Remaining fluid is guided, from the outlet zone, through a fluid outlet of the gas separation vessel 120; this is stream b as mentioned before. Overall, therefore, a fluid flow is circulated between the gas separation vessel 120 and the electrolysis unit 110.

As water is converted into oxygen and hydrogen in the electrolysis unit 110 and the oxygen and hydrogen are discharged, the amount of water is reduced and new water (so-called make-up water) can therefore be supplied externally as stream a, e.g., into gas separation vessel 120, in order to maintain continuous operation.

This water a can be treated beforehand, for example, but this is of no further relevance to the present invention. Similarly, any water separated in the hydrogen separator 130 can be fed back into the gas separation vessel 120, possibly also after prior treatment.

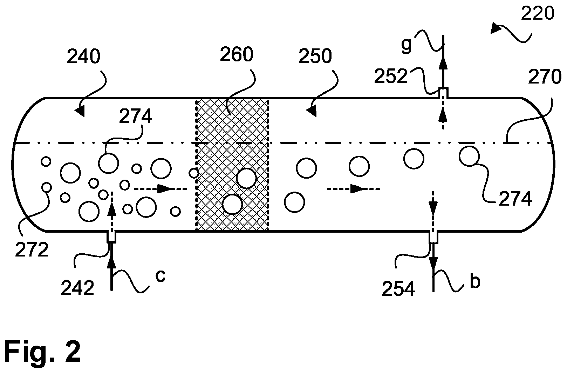

Fig. 2 schematically illustrates a gas separation vessel 320 in an embodiment; gas separation vessel 220 can be used in electrolysis system 100 of Fig. 1 for example. By means of Fig. 2, a gas separation vessel shall be explained in more detail. By means of example, the gas separation vessel 320 is a horizontally oriented, elongated vessel.

The gas separation vessel 320 comprises an inlet 242 by which fluid c (as mentioned with respect to Fig. 1) can be fed into the gas separation vessel 220. The inlet 242 is located on an inlet zone 240 (or inlet zone) of the gas separation vessel 220. The fluid c comprises, as mentioned above, water and oxygen. When inside the gas separation vessel 220, the fluid comprises a surface 270, and the oxygen is present, as mentioned, at least when feed into the gas separation vessel 220, in the form of bubbles in the water. Such bubbles typically comprise bubbles of different sizes. For illustration purposes, small bubbles are referred to by 272 and larger bubbles by 274.

In the example of Fig. 2, the inlet 242 is located at the bottom of the gas separation vessel 220. This, however, is only for illustration purposes; the inlet 242 could also be located at the top of the gas separation vessel 220 or at a side wall. Further examples will be explained below.

The gas separation vessel 220 comprises a gas outlet 252 by which oxygen g (as mentioned with respect to Fig. 1) can be discharged from the gas separation vessel, and the gas separation vessel 220 comprises a fluid outlet 254 by which remaining fluid b (as mentioned with respect to Fig. 1) can be discharged from the gas separation vessel 220. The gas outlet 252 and the fluid outlet 254 are located on an outlet zone 250 (or outlet zone) of the gas separation vessel 220.

In the example of Fig. 2, the gas outlet 252 and the fluid outlet 254 are located at the top of the gas separation vessel 220 and the gas outlet 252 is located at the bottom of the gas separation vessel 220.

Further, the gas separation vessel 220 comprises a gas separation assisting means 260, which, for example, comprises or is a structured packing or a mesh, having high specific surface; the gas separation assisting means 260 can be made of plastic, for example.

When operating the electrolysis system, the fluid ca is guided, from the inlet zone 240, through the gas separation assisting means 260, to the outlet zone 250; this is indicated by means of arrows in Fig. 2. In this way, the oxygen bubbles, present in the fluid, in particular the smaller ones, 272 are merged by means of the gas separation assisting means 260; this is indicated by having only larger bubbles 274 on the outlet zone 250.

These oxygen bubbles, when entering the gas separation assisting means 260, adhere to the large specific surface offered and coalesce with other bubbles to form larger bubbles. The buoyancy of these larger bubbles is higher than the buoyancy of smaller bubbles. When leaving the gas separation assisting means 260, these larger bubbles therefore reach the water surface 270 much faster and are, therefore, separated.

Fig. 3 illustrates a gas separation vessel 320 according to another embodiments. The gas separation vessel 320 basically is similar to the gas separation vessel 220, thus, only differing features are described. Like elements and components are referred to by like reference numerals (with a leading 3 instead of a leading 2). Note that only the left part of the gas separation vessel 320 is shown, compared to the gas separation vessel 220 of Fig. 2.

The gas separation vessel 320 comprises an inlet 342, wherein the inlet 342 comprises an inlet pipe 344. The inlet pipe 344 is guided into the inside of the gas separation vessel 320. The inlet pipe 344 comprises an opening 346, wherein the opening 346 is directed at least partly towards a wall 322 of the gas separation vessel 320 (here, this wall 322 is a curved base of the vessel) and at least partly away from the gas separation assisting means 260.

It is noted that although only one inlet pipe is shown, such gas separation vessel could also comprise multiple inlet pipes, e.g., two, three, four or five. These could be arranged next to each other, for example. The stream of fluid c can then be distributed between the multiple inlet pipes.

The electrolysis system or the gas separation vessel further comprises a calming baffle 380, e.g., comprising or configured as a perforated splash plate, which is arranged inside the gas separation vessel 320, wherein the inlet pipe 344 extends through the perforated splash plate 380 or an opening therein. In case of multiple inlet pipes, each could extend through the splash plate. In addition, the inlet pipe 344 can be arranged vertically, which minimizes e.g. piping length if the separator is located above the electrolyser stacks. The perforated splash plate 380 can be oriented horizontally to minimize gas ingress and penetration depth into the liquid surface.

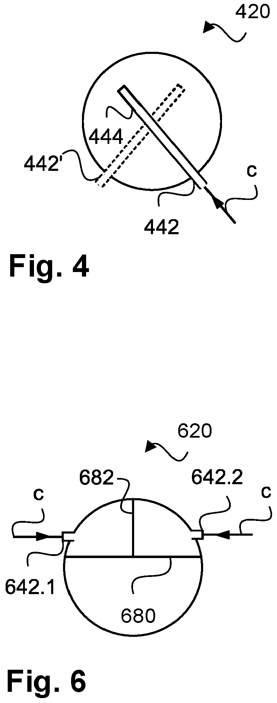

Fig. 4 illustrates a gas separation vessel 420 according to another embodiment. The gas separation vessel 420 basically is similar to the gas separation vessel 220, thus, only differing features are described. Like elements and components are referred to by like reference numerals (with a leading 4 instead of a leading 2). Note that the gas separation vessel 420 is shown in a cross section, compared to the gas separation vessel 220 of Fig. 2.

The gas separation vessel 420 comprises an inlet 442, wherein the inlet 442 comprises an inlet pipe 444. Different to the gas separation vessel 320 of Fig. 3, the inlet pipe 444 of gas separation vessel 420 is arranged in a diagonal way and from a side wall rather than from the bottom. This arrangement can minimize the required distances between several inlets dictated by flange sizes, if these inlets are positioned in alternating diagonal pattern towards a center plane. In Fig. 4, a further inlet 442' is indicated having a mirrored arrangement and location. Besides the different location and orientation, the inlet 442' can correspond to inlet 442.

Although not shown, a perforated splash plate or another calming baffle, arranged inside the gas separation vessel, could also be provided, wherein the inlet pipe 444 extends through the perforated splash plate or an opening therein.

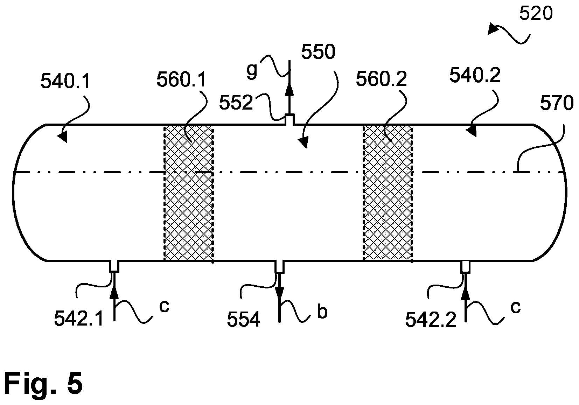

Fig. 5 illustrates a gas separation vessel 520 according to another embodiment. The gas separation vessel 520 basically is similar to the gas separation vessel 220, thus, only differing features are described. Like elements and components are referred to by like reference numerals (with a leading 5 instead of a leading 2).

Compared to the gas separation vessel of Fig. 2, the gas separation vessel 520 comprises two inlet zones 540.1 on the left and 540.2 on the right. The outlet zone (or one) 550 is arranged between them. Each of the two inlet zones 540.1, 540.2, comprises an inlet 542.1, 542.2. Each of these can be formed like described with respect to any of Figs. 2 to 4 above; also, a splash plate could be provided, at each inlet zone. Correspondingly, there are provided two gas separation assisting means 560.1, 560.2. Compared to gas separation vessel 220, the horizontal liquid velocity is halved at the same diameter and residence time. Further, the overall pipe lengths can be minimized if several stacks are feeding into one gas separation vessel.

Fig. 6 illustrates a gas separation vessel 620 according to another embodiment. The gas separation vessel 620 basically is similar to the gas separation vessel 220, thus, only differing features are described. Like elements and components are referred to by like reference numerals (with a leading 6 instead of a leading 2). Note that the gas separation vessel 620 is shown in a cross section, compared to the gas separation vessel 220 of Fig. 2.

The gas separation vessel 620 comprises two inlets 642.1, 642.2, both located on a side wall of the gas separation vessel 620. Besides a perforated splash plate 680, oriented horizontally, and which can be similar the perforated splash plate shown in Fig. 3, an additional plate 682 can be provided; the latter can be oriented vertically and between the two inlets 642.1, 642.2. In case of several inlets or inlet nozzles, this embodiment allows all feeds to enter the vessel at the same distance to the liquid outlet.

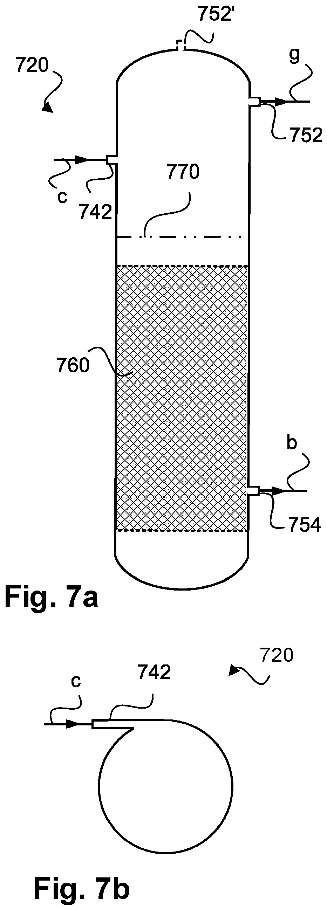

Fig. 7a illustrates a gas separation vessel 720 according to another embodiment. The gas separation vessel 720 basically is similar to the gas separation vessel 220, thus, only differing features are described. Like elements and components are referred to by like reference numerals (with a leading 7 instead of a leading 2).

A major difference to the gas separation vessel 220 is that gas separation vessel 720 is oriented vertically. This is advantageous if footprint must or should be minimized. The previously described configurations (separation vessel oriented horizontally) are advantageous if height must or should be minimized. In this case, the inlet 742 is located on top of the gas separation vessel 720 and at a side. In case of further inlets, these could also be located at a same or similar height, e.g., distributed around the circumference of the gas separation vessel.

Fig. 7b illustrates a top view showing that the inlet 742 (or also other inlets) can be arranged tangentially to the outer surface or wall of the gas separation vessel 720. This improves initial separation of oxygen due to centrifugal forces.

The gas separation assisting means 760 is located in the sump of the gas separation vessel 720; due to the vertical orientation of the gas separation vessel 720, this means that the fluid outlet 754 is located, seen in vertical direction, within the gas separation assisting means 760 but at the lower end, for example. The gas separation assisting means 760 can also extend above the liquid level (surface) 770, which then eliminates the need for a splash plate, for example.

The gas outlet 752 can be located at the top of the gas separation vessel 720, above the surface 770, for example, either at the side wall as indicated with gas outlet 752 or at the top cover as indicated with gas outlet 752'. The installation of gas separation assisting means is easier compared to the horizontal variants. Also, the use of cheaper random packing is possible in this configuration.

## Claims

1. A gas separation vessel (120, 220, 320, 420, 520, 620, 720) for separating gas from liquid of a continuous liquid phase fluid comprising gas, the gas separation vessel comprising an inlet (142, 242), a gas outlet (142, 242) and a fluid outlet (254),
wherein the gas separation vessel is configured to receive a stream of fluid (c) via the inlet (142, 242) of the gas separation vessel (120, 220, 320, 420, 520, 620, 720),
wherein the gas separation vessel comprises a gas separation assisting means (260) located inside the gas separation vessel (120, 220, 320, 420, 520, 620, 720), wherein the gas separation vessel is configured to guide fluid (b) received via the inlet of the gas separation vessel, from an inlet zone (240), through the gas separation assisting means, to an outlet zone (250),
wherein the gas separation vessel (120, 220, 320, 420, 520, 620, 720) is configured to guide gas (g), separated from the liquid by means of the gas separation assisting means, through a gas outlet (252) of the gas separation vessel, and
wherein the gas separation vessel is configured to guide remaining fluid (b), through the fluid outlet (254) of the gas separation vessel.

2. The gas separation vessel of claim 1, wherein the gas separation assisting means (260) comprises at least one of: a structured packing, a random packing, a coalescent packing, a mesh, a structure having high specific surface, high void fraction, plate pack.

3. The gas separation vessel of claim 1 or 2, wherein the gas separation assisting means (260) is made of plastic or coated with plastic.

4. The gas separation vessel of any one of the preceding claims, wherein the gas separation vessel is an elongated vessel that is horizontally oriented, wherein the gas separation assisting means is located, seen in horizontal direction, between the inlet on the inlet zone and the gas outlet and the fluid outlet on the outlet zone.

5. The gas separation vessel of any one of the preceding claims, wherein the inlet comprises an inlet pipe (344, 444) guided into the inside of the gas separation vessel, wherein the inlet pipe comprises an opening (346), wherein the opening is directed at least partly towards a wall (322) of the gas separation vessel and at least partly away from the gas separation assisting means.

6. The gas separation vessel of claim 5, further comprising a calming baffle, wherein the calming baffle (380) is arranged inside the gas separation vessel, and wherein the inlet pipe extends through the calming baffle.

7. The gas separation vessel of claim 6, wherein the inlet pipe is arranged vertically, and wherein the calming baffle is oriented horizontally.

8. A system (100) comprising a processing unit (110) configured to provide liquid phase fluid comprising gas, the system further comprising the gas separation vessel (120) of any one of the preceding claims, and a fluid connection (126) connecting the processing unit with the inlet (142, 242) of the gas separation vessel (120, 220, 320, 420, 520, 620, 720),
wherein the system (100) is configured to generate, in the fluid connection (126), a stream of fluid (c) from the processing unit (110) to the inlet (142, 242) of the gas separation vessel (120, 220, 320, 420, 520, 620, 720),

9. The system (100) of claim 8, configured as an electrolysis system (100), wherein the processing unit (110) is configured as an electrolysis unit (110) configured to convert water into oxygen and hydrogen, the fluid connection (126) connecting an oxygen side (114) of the electrolysis unit with the inlet (142, 242) of the gas separation vessel (120, 220, 320, 420, 520, 620, 720),
wherein the electrolysis system (100) is configured to generate, in the fluid connection (126), a stream of fluid (c) from the oxygen side (114) of the electrolysis unit (110) to the inlet (142, 242) of the gas separation vessel (120, 220, 320, 420, 520, 620, 720), wherein the fluid comprises water as liquid and oxygen as gas.

10. A method for separating gas from liquid of a continuous liquid phase fluid comprising gas,
wherein the fluid (c) is guided to a gas separation vessel (120, 220, 320, 420, 520, 620, 720),
wherein gas is separated from liquid, in the gas separation vessel (120, 220, 320, 420, 520), in that the fluid is guided, from an inlet zone, through a gas separation assisting means located inside the gas separation vessel, to an outlet zone,
wherein gas (g), separated from the liquid by means of the gas separation assisting means, is guided through a gas outlet of the gas separation vessel, and
wherein remaining fluid (b) is guided through a fluid outlet of the gas separation vessel.

11. The method of claim 10, wherein gas bubbles (272, 274), present in the fluid, are agglomerated and coalesced by means of the gas separation assisting means (260) when the fluid is guided from the inlet zone to the outlet zone.

12. The method of claim 10 or 11, wherein the gas separation assisting means (260) comprises at least one of: a structured packing, a random packing, a coalescent packing, a mesh, a structure having high specific surface, high void fraction, a plate pack.

13. The method of any one of claims 10 to 12, wherein the gas separation assisting means is made of plastic or coated with plastic.

14. The method of any one of claims 10 to 13, wherein the fluid (c) is received from a processing unit of a system, preferably, from a electrolysis unit of an electrolysis system.

15. The method of any one of claims 10 to 14, wherein the gas separation vessel of any one of claims 1 to 7 is used and/or, when referring back to claim 14, the system of claim 8 or 9 is used.
